# EUROPÄISCHE PATENTSCHRIFT

(11) **EP 0 640 813 B1**
(45) Veröffentlichungstag und Bekanntmachung des Hinweises auf die Patenterteilung: **05.11.1997**
(21) Anmeldenummer: 94112286.3
(22) Anmeldetag: 05.08.1994
(51) Int. Cl.: G01G 3/14, G01L 1/22

(54) **Ringsteg-Wägezelle mit Ringkerben zur Nennlasteinstellung**
Ring bar load cell with ring grooves for nominal load regulation
Capteur de force à barre annulaire avec des rainures annulaires pour le réglage nominal de la charge

(30) Priorität: 25.08.1993 DE 9312740 U
(43) Veröffentlichungstag der Anmeldung: 01.03.1995
(73) Patentinhaber: SIEMENS AKTIENGESELLSCHAFT, 80333 München (DE)
(72) Erfinder: Winkler, Fritz, Dipl.-Ing., D-91058 Erlangen (DE)

(56) Entgegenhaltungen:
- EP-A- 0 288 985
- DE-A- 4 125 398
- US-A- 3 427 875
- WAGEN UND DOSIEREN., Bd.24, Nr.2, März 1993, MAINZ DE Seiten 14-16 - 19-22 BERNHARD H. BEETZ 'Ringtorsion - Wägezellen für die industrielle Messtechnik'
- CHEMIETECHNIK, Bd.22, Nr.6, Juni 1993, HEIDELBERG DE Seiten 38 - 40-41 BERNHARD H. BEETZ 'Wägezellen mit dem Biegering - Messprinzip'
- SENSORS AND ACTUATORS A, Bd.A26, Nr.1-3, März 1991, LAUSANNE CH Seiten 285 - 293 KLAUS BETHE 'Dynamometrical Sensors:(Many)Problems,(Some)Solutions'

## Beschreibung

Die Erfindung betrifft eine Wägezelle mit einem äußeren Lagerring und einem inneren Krafteinleitungsrohr, welche über einen scheibenförmigen Ringsteg miteinander verbunden sind.

Ringsteg-Wägezellen funktionieren im wesentlichen nach dem folgenden Prinzip: Bei Einleitung einer Kraft in das innere Krafteinleitungsrohr der Wägezelle tritt in radialer Richtung eine s-förmige Verformung des scheibenförmigen Ringsteges auf, welcher den äußeren Lagerring mit dem inneren Krafteinleitungsrohr verbindet. Die in diesem Fall auf den Oberflächen des scheibenförmigen Ringsteges auftretenden Dehnungen bzw. Stauchungen werden von Dehnungsmeßstreifen erfaßt, deren Leiterbahnen radial verlaufen.

Eine solche Wägezelle ist z.B. in einem Artikel von K. Bethe in Sensors and Actuators, A26, März '91, Nr.1/3, Lausanne (CH), Seiten 285-293 beschrieben.

Ringsteg-Wägezellen weisen den Vorteil auf, daß deren im wesentlichen aus einem äußeren Lagerring, einem inneren Krafteinleitungsrohr und einem die beiden Elemente verbindenden, scheibenförmigen Ringsteg bestehender Formkörper einfach aufgebaut und somit kostengünstig zu fertigen ist.

Im Gegensatz dazu ist an Stelle des einfachen, scheibenförmigen Ringsteges bei sogenannten Biegering-Wägezellen mit Hilfe von Stegen, Rohren oder elastische Gelenke bildenden Einschnitten ein komplizierter, speziell gestalteter Verformungskörper im Bereich zwischen dem äußeren Lagerring und dem inneren Krafteinleitungsrohr angeordnet. Beispiele von Biegering-Wägezellen sind z.B. in der DE-AS 1 268 878 und der DE-37 14 613 C2 enthalten. Bei einer Krafteinleitung in derartige Zellen werden zur Gewichtserfassung die auf den Oberflachen des Verformungskörpers auftretenden Dehnungen und Stauchungen meßtechnisch erfaßt. Hierzu ist der Verformungskörper mit konzentrisch um die Achse der Wägezelle gewickelten Widerstandsdrahtringen belegt. Die bei einer Krafteinleitung auftretende tangentiale Durchmesseränderung in diesen ringförmig gewickelten Dehnungsmeßstreifen wird meßtechnisch ausgewertet. Der Verformungskörper derartiger Biegering-Wägezellen weist in der Regel eine komplizierte Querschnittsform auf, und kann nur mit einem entsprechenden Aufwand gefertigt werden. Ebenso ist das Anbringen der spiralförmigen Widerstandsdrahtwicklungen technisch aufwendig.

Demgegenüber liegt der Erfindung die Aufgabe zugrunde, eine auf dem Ringstegprinzip beruhende Wägezelle anzugeben, welche möglichst einfach aufgebaut, und deren Nennlastbereich in einer möglichst einfache Weise auf einen jeweils gewünschten Wert einstellbar ist.

Die Aufgabe wird gelöst mit der im Anspruch 1 angegebenen Wägezelle. Vorteilhafte weitere Ausführungsformen sind in den Unteransprüchen angegeben.

Gemäß der Erfindung sind auf einer der beiden Außenflächen des scheibenförmigen Ringsteges zwischen dem äußeren Lagerring und dem inneren Krafteinleitungsrohr der Wägezelle eine äußere und eine innere Ringkerbe eingebracht. Auf der gegenüber liegenden, anderen Außenfläche des scheibenförmigen Ringsteges sind Dehnungsmeßstreifen jeweils möglichst direkt über der darunter liegenden äußeren und inneren Ringkerbe angebracht. Die Leiterbahnen der Dehnungsmeßstreifen verlaufen dabei radial.

Die erfindungsgemäße Wägezelle hat den besonderen Vorteil, daß ein jeweils gewünschter Nennlastbereich für die Zelle auf einfache Weise über die Kerbtiefe der äußeren und inneren Ringkerbe eingestellt werden kann. Dabei nimmt der Nennlastbereich der Wägezelle mit der Zunahme der Kerbtiefe der äußeren und inneren Ringkerbe ab. Dies hat den besonderen Vorteil, daß in der Regel lediglich ein einziger, den äußeren Lagering, das innere Krafteinleitungsrohr und den dazwischen liegenden, scheibenförmigen Ringsteg betreffender Standardformkörper vorhanden sein muß, welcher als Grundbauelement für Wägezellen mit unterschiedlichen Nennlastbereichen verwendet werden kann. Der im Einzelfall gewünschte Nennlastbereich wird dann durch Einbringen einer äußeren und inneren Ringkerbe mit entsprechend ausgewählter Kerbtiefe in den Standardformkörper eingestellt.

So ist es in der Praxis z.B. mit Hilfe eines einzigen Standardformkörpers möglich, allein durch Variation der Kerbtiefe der äußeren und der inneren Ringkerbe auf der einen Außenfläche des scheibenförmigen Ringsteges Wägezellen herzustellen, welche Nennlastbereiche aufweisen, von 0,6 kg, 1,3 kg, 2,8 kg, 6 kg, 13 kg, 28 kg, 60 kg, 130 kg und 280 kg. Mit einem zweiten, in den Abmessungen größer dimensionierten Standardformkörper können in der gleichen Weise sich anschließende Nennlastbereiche von 600 kg, 1,3 t, 2,8 t und 6 t eingestellt werden.

Neben dem außerordentlich einfachen Aufbau der erfindungsgemäßen Ringsteg-Wägezelle, und der einfachen und kostengünstigen Weise, unterschiedlichste Nennlastbereich durch Variation der Kerbtiefe der äußeren und inneren Ringkerbe einzustellen, weist die Erfindung weitere Vorteile auf. Da nur eine der Außenflächen des scheibenförmigen Ringsteges mit Dehnungsmeßstreifen belegt ist, muß somit nur diese mit Hilfe einer einzigen Abdeckscheibe gegen das Eindringen von Schmutz und Feuchtigkeit verschlossen werden. Ein weiterer Vorteil wird darin gesehen, daß pflasterförmige Dehnungsmeßstreifen mit radial verlaufenden Leiterbahnen auf einfache Weise an beliebigen Radiallinien auf der ebenen der beiden Außenflächen des scheibenförmigen Ringsteges aufgebracht werden können.

Die Erfindung wird des weiteren an Hand der in den nachfolgend kurz angeführten Figuren dargestellten Ausführungsbeispiele weiter erläutert. Dabei zeigt:
- FIG 1: eine vorteilhafte Ausführungsform einer erfindungsgemäßen Ringsteg-Wägezelle in Querschnittsdarstellung, und
- FIG 2: eine Draufsicht auf eine Ringsteg-Wägezelle, welche im wesentlichen der Ausführung von FIG 1 entspricht.

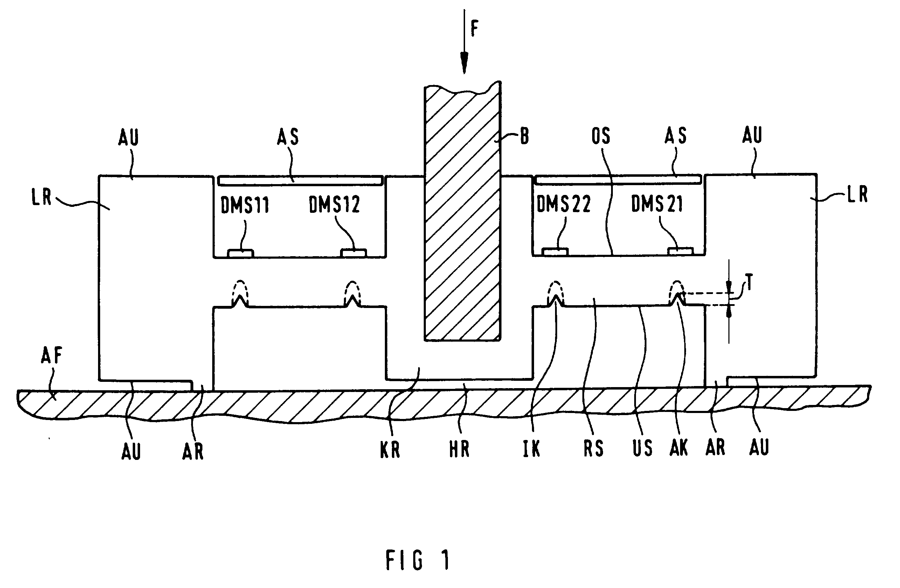

Der Formkörper der in FIG 1 beispielhaft dargestellten Ringsteg-Wägezelle weist einen äußeren Lagerring LR, ein inneres Krafteinleitungsrohr KR und einen diese beiden Elemente verbindenden, scheibenförmigen Ringsteg RS auf. Die Wägezelle liegt über eine der beiden Außenseiten AU des Lagerringes LR auf einer externen Auflagefläche AF auf.

Die Krafteinleitung in die Wägezelle erfolgt in Richtung des in FIG 1 mit F bezeichneten Pfeiles bevorzugt über einen Druckbolzen B, welcher im inneren Krafteinleitungsrohr KR gelagert ist. Als sogenannter "Meßweg" steht der Hubbereich HR zwischen der Unterseite des Krafteinleitungsrohres KR und der darunter befindlichen Auflagefläche AF zur Verfügung. Ist bei großer Krafteinleitung und entsprechender Absenkung des Krafteinleitungsrohres KR der Hubbereich HR ausgeschöpft, so kommt das Krafteinleitungsrohr KR auf der Auflagefläche AF zu liegen und wird dort im Sinne einer Überlastsicherung abgestützt.

Erfindungsgemäß ist im Beispiel der Fig 1 die der Krafteinleitung abgewandte und der Auflagefläche AF zugewandte Außenfläche US des scheibenförmigen Ringsteges RS mit einer äußeren und einer inneren Ringkerbe AK, IK versehen. Durch Vergrößerung der Kerbtiefe T kann in der oben beschriebenen Weise die Steifheit des scheibenförmigen Ringsteges RS verringert und damit ein niedrigerer Nennlastbereich für die Wegezelle eingestellt werden. Auf der gegengegenüber über liegenden, im Beispiel der FIG 1 der Krafteinleitung F zugewandten Außenfläche OS des scheibenförmigen Ringsteges RS sind möglichst direkt über den darunter liegenden Ringkerben AK, IK Dehnungsmeßstreifenpaare aufgebracht. So befindet sich ein erstes Dehnungsmeßstreifenpaar DMS11, DMS12 direkt über der äußeren und inneren Ringkerbe AK, IK im linken Bereich von FIG 1. Dementsprechend befindet sich ein zweites Dehnungsmeßstreifenpaar DMS21, DMS22 auf der Außenfläche OS unmittelbar über der äußeren und inneren Ringkerbe AK, IK im rechten Bereich von FIG 1.

Zum Schutz gegen Schmutz, mechanische Beschädigung und Feuchtigkeit ist im Beispiel der Fig 1 diejenige Außenfläche OS des scheibenförmigen Ringsteges RS, welche mit den Dehnungsmeßstreifen belegt ist, mit einer Abdeckscheibe AS verschlossen. Eine entsprechende Abdeckung der gegenüber liegenden, die äußere und innere Ringkerbe AK, IK aufweisende Außenfläche US des scheibenförmigen Ringsteges RS ist dagegen nicht notwendig.

Gemäß einer weiteren, in FIG 1 bereits dargestellten Ausführungsform der Erfindung ist an der Innenkante der Auflagefläche AU des äußeren Lagerringes LR, welche der externen Auflagefläche AF gegenüberliegt, ein Auflagering AR vorhanden. Dessen Auflagefläche ist mindestens so groß, daß auch bei Einleitung einer großen Meßkraft F keine plastische Verformung des Auflageringes AR und der darunter liegenden Auflagefläche AF auftritt.

Der Auflagering AR hat den Vorteil, daß nahezu unabhängig von der Größe der jeweils in das Krafteinleitungsrohr KR eingeleiteten Last eine definierte und möglichst kleine Aufstandsfläche der Ringsteg-Wägezelle auf der darunter befindlichen Auflagefläche AF auftritt. Dies hat zum einen den Vorteil, daß Einkopplungen von möglichen äußeren Schwingungen nur über die kleine Aufstandsfläche des Auflageringes AR erfolgen können, und somit deren Auswirkung auf die Dehnungsmeßstreifen und somit die Meßgenauigkeit der Wägezelle klein sind. Ein weiterer Vorteil des Auflageringes AR besteht darin, daß der Abstand zwischen der Mitte des Krafteinleitungsrohres KR und der Mitte des Auflageringes AR, d.h. der sogenannte Stützabstand, nahezu lastunabhängig ist. Bei Nichtvorhandensein des Auflageringes würde der Stützabstand mit zunehmender Krafteinleitung abnehmen, da sich die Außenseiten AU des äußeren Lageringes LR bei Krafteinleitung an den Außenkanten von der Auflagefläche AF zunehmend abheben.

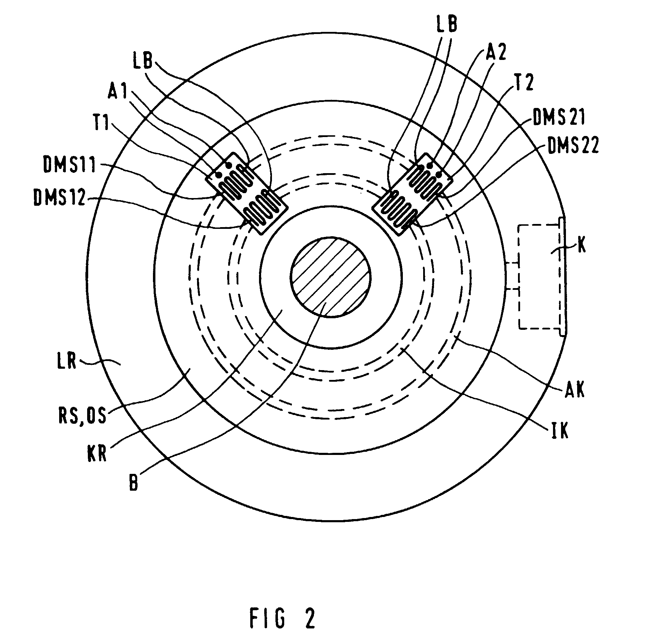

FIG 2 zeigt schließlich eine Draufsicht auf eine weitere Ringsteg-Wägezelle, welche im wesentlichen dem Beispiel von FIG 1 entspricht. Man erkennt, daß die dem Betrachter zugewandte ebene Außenfläche OS des scheibenförmigen Ringsteges RS mit den Dehnungsmeßstreifenpaaren DMS11,DMS12 und DMS21, DMS22 belegt ist. Die direkt darunter auf der abgewandten Außenfläche US befindlichen Ringkerben AK, IK sind in FIG 2 in strichlierter Linie eingetragen. Bevorzugt ist jedes Dehnungsmeßstreifenpaar auf einem separaten Träger T1 bzw. T2 angebracht, wodurch die Montage wesentlich erleichtert wird. Wie bereits oben beschrieben, verlaufen die Leiterbahnen LB in radialer Richtung und können über elektrische Anschlußkontakte A1, A2 mit einem Kabel verbunden werden, welches über eine Einführungsöffnung K durch den äußeren Lagerring LR hindurch in den Raum zwischen Lagerringe LR und innerem Krafteinleitungsrohr KR einführbar ist.

## Patentansprüche

1. Wägezelle mit einem äußeren Lagerring (LR) und einem inneren Krafteinleitungsrohr (KR), welche über einen scheibenförmigen Ringsteg (RS) miteinander verbunden sind, wobei
a) die eine Außenfläche (US) des scheibenförmigen Ringsteges (RS) eine äußere und eine innere Ringkerbe (AK,IK) aufweist, und
b) auf der anderen Außenfläche (OS) des scheibenförmigen Ringsteges (RS) Dehnungsmeßstreifen (DMS11,DMS12;DMS21, DMS22) möglichst direkt über der darunter liegenden äußeren und inneren Ringkerbe (AK,IK) auf der einen Außenfläche (US) angebracht sind, wobei die Leiterbahnen (LB) der Dehnungsmeßstreifen radial verlaufen.

2. Wägezelle nach Anspruch 1, mit einer Abdeckscheibe (AS) zum Verschluß der die Dehnungsmeßstreifen (DMS11, DMS12;DMS21,DMS22) tragenden Außenfläche (OS) des scheibenförmigen Ringsteges (RS).

3. Wägezelle nach Anspruch 1 oder 2, mit einem Auflagering (AR) an der Innenkante der einer externen Auflagefläche (AF) gegenüber liegenden Außenseite (AU) des äußeren Lagerringes (LR).

## Claims

1. Load cell having an outer bearing ring (LR) and an inner force-introduction tube (KR) which are connected together by way of a disc-shaped ring bar (RS), wherein
a) the one outer face (US) of the disc-shaped ring bar (RS) has an outer and an inner ring notch (AK, IK), and
b) on the other outer face (OS) of the disc-shaped ring bar (RS) strain gauges (DMS11,DMS12;DMS21, DMS22) are provided as directly as possible above the outer and the inner ring notch (AK, IK) which lie underneath on the one outer face (US), in which case the printed conductors (LB) of the strain gauges extend radially.

2. Load cell according to claim 1, having a cover disc (AS) for sealing the outer face (OS) of the disc-shaped ring bar (RS) which bears the strain gauges (DMS11,DMS12; DMS21,DMS22).

3. Load cell according to claim 1 or 2, having a support ring (AR) at the inner edge of the outside (AU) of the outer bearing ring (LR) that lies opposite an external support face (AF).

## Revendications

1. Cellule de pesage comportant un anneau (LR) extérieur de support et un tube (KR) intérieur d'application de force, qui sont reliés entre eux par l'intermédiaire d'une barre (RE) annulaire en forme de disque, dans laquelle
a) l'une (US) des surfaces extérieure de la barre (RS) annulaire en forme de disque a une rainure annulaire extérieure et une rainure annulaire intérieure (AK, IK), et
b) il est prévu sur l'autre surface extérieure (OS) de la barre annulaire (RS) en forme de disque des jauges de contrainte (DMS11,DMS12;DMS21,DMS22) le plus directement possible au-dessus de la rainure annulaire extérieure et de la rainure annulaire intérieure (AK, IK) se trouvant sur ladite une surface extérieure (US), les pistes conductrices (LD) des jauges de contrainte s'étendant radialement.

2. Cellule de pesage suivant la revendication 1, comportant un disque (AS) de couverture pour la fermeture de la surface extérieure (OS) de la barre annulaire en forme de disque (RS) qui porte les jauges de contrainte (DMS11, DMS12; DMS21, DMS22).

3. Cellule de pesage suivant la revendication 1 ou 2, comportant un anneau (AR) de support sur le bord intérieur du côté extérieur (AU), se trouvant en face d'une surface (AF) extérieure de support, de l'anneau extérieur de support (LR).
